(19) Europäisches Patentamt / European Patent Office / Office européen des brevets

(11) **EP 3 941 712 B1**

(12) **FASCICULE DE BREVET EUROPEEN**

(45) Date de publication et mention de la délivrance du brevet:
**04.10.2023 Bulletin 2023/40**

(21) Numéro de dépôt: **20731168.9**

(22) Date de dépôt: **20.03.2020**

(51) Classification Internationale des Brevets (IPC):
**B29C 64/112** (2017.01) **B29C 64/205** (2017.01)
**B29C 64/268** (2017.01) **B41J 2/00** (2006.01)

(52) Classification Coopérative des Brevets (CPC):
**B29C 64/205; B29C 64/268;** B29C 64/106;
B29C 64/223; B29C 64/245; B29C 64/307;
B33Y 30/00; B33Y 80/00

(86) Numéro de dépôt international:
**PCT/FR2020/050616**

(87) Numéro de publication internationale:
**WO 2020/193927 (01.10.2020 Gazette 2020/40)**

(54) **PROCÉDÉ D'IMPRESSION ADDITIVE TRIDIMENSIONNELLE**

DREIDIMENSIONALES ADDITIVES DRUCKVERFAHREN

THREE-DIMENSIONAL ADDITIVE PRINTING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2019 FR 1902998**

(43) Date de publication de la demande:
**26.01.2022 Bulletin 2022/04**

(73) Titulaire: **Poietis**
**33600 Pessac (FR)**

(72) Inventeurs:
• **SOTO, Dan**
**33700 MERIGNAC (FR)**
• **GUILLEMOT, Fabien**
**33210 PREIGNAC (FR)**
• **VIELLEROBE, Bertrand**
**33700 MERIGNAC (FR)**
• **CLAPIES, Aude**
**33600 PESSAC (FR)**

(74) Mandataire: **IP Trust**
**2, rue de Clichy**
**75009 Paris (FR)**

(56) Documents cités:
**WO-A1-2017/004615     WO-A1-2018/193446**

**Description**

La présente invention concerne le domaine de l'impression additive tridimensionnelle, notamment assistée par laser et plus particulièrement, mais non limitativement, la bioimpression, technique d'organisation spatiale de cellules vivantes et d'autres produits biologiques en les assemblant et en utilisant une méthode de dépôt couche par couche assistée par ordinateur pour développer des tissus vivants et des organes pour l'ingénierie tissulaire, la médecine régénérative, la pharmacocinétique et plus généralement la recherche en biologie. L'impression additive tridimensionnelle assistée par laser consiste à transférer des éléments vers une cible ou « récepteur », à partir d'une lame supportant une encre contenant les éléments transférables par un jet produit par exemple par la vaporisation locale d'un substrat par une impulsion laser, apportant une énergie cinétique transférée directement à l'encre qui entraîne localement dans sa course une partie du liquide, une particule transférable ou un agrégat de particules contenues dans l'encre.

Les particules transférables ou inhomogénéités contenues dans l'encre peuvent être de différentes natures. On entend par « inhomogénéité » au sens de la présente invention une zone d'intérêt de l'encre ou plus communément appelée bio-encre de composition organique, minérale ou vivante, en particulier :

- des particules nanoscopiques telles que des exosomes ou autres vésicules produites par les cellules ou des nanoparticules de biomatériaux (hydroxyapatite) ou encore des nano-capsules de biomolécules (facteurs de croissance),
- des particules microscopiques telles que des cellules vivantes (cellules eucaryotes, cellules souches, globules, ...), des micro-particules de biomatériaux, des micro-capsules de biomolécules (facteurs de croissance),
- des particules mésoscopiques telles que des sphéroïdes constitués par des amas de cellules, des microcarriers dont la surface est revêtue de cellules et/ou de biomatériaux.
- des amas de particules dont la cohésivité est assurée au sein d'une capsule ou par un liquide ou gel visqueux. De préférence, dans le contexte de la bio-impression, on entend par particules, des objets ayant des propriétés biologiques, comme par exemple, des cellules vivantes, des exosomes ou encore des biomolécules (par exemple des macromolécules, des protéines, des peptides).

Mais toutefois, cet équipement et le procédé correspondant ne s'arrêtent pas à cette définition selon l'invention. En effet, les particules peuvent également être non biologiques (c'est à dire inertes) et constituées par exemple d'un ou plusieurs biomatériaux, leur nature dépendant de l'application visée. L'ingénierie tissulaire vise à concevoir et développer des solutions de substitution biologiquement aptes à remplacer, restaurer ou maintenir les fonctions d'un tissu natif (épiderme, cornée, cartilage, épicarde, endocarde, ...), voire d'un organe. Un exemple est décrit dans l'article Griffith, L. G., & Naughton, G. (2002). Tissue engineering-- current challenges and expanding opportunities. Science, 295(5557), 1009-1014.

Pour pallier ces inconvénients, l'impression d'éléments biologiques, plus communément appelée bio-impression, a commencé à être imaginée, comme exposé dans les articles de : Klebe, R. (1988). Cytoscribing : A Method for Micropositioning Cells and the Construction of Two- and Three-Dimensional Synthetic Tissues. Expérimental Cell Research, 179 (2): 362-373. Et Klebe, R., Thomas, C, Grant, G., Grant, A. et Gosh, P. (1994). Cytoscription : Computer controlled micropositioning of cell adhésion proteins and cells. Methods in Cell Science, 16 (3): 189-192.

L'invention concerne plus particulièrement la technique d'impression dite « LIFT - Laser-Induced Forward Transfer », autrement appelée LAB (Laser Assisted Bioprinting ou BioLP (Bio laser printing)), avec un faisceau laser dirigé vers le haut, le récepteur étant situé au-dessus du support de l'encre.

Le support sur lequel repose l'encre peut être revêtu d'une couche absorbante sacrificielle, par exemple une couche d'or pour aider au processus de génération de jet en augmentant l'absorption de l'énergie laser. Dans ce cas, l'impulsion laser est absorbée à l'interface du donneur.

Alternativement, l'impression par laser peut être réalisée avec un support d'encre dépourvu de couche absorbante. Dans ce cas, les caractéristiques du laser et des moyens de focalisation associés doivent être optimisés pour pouvoir générer le jet, comme par exemple outrepasser le seuil d'ablation du liquide (l'encre) faiblement absorbant à la radiation laser afin de générer le plasma nécessaire à la création du jet d'impression ou encore générer la bulle de cavitation directement par onde de choc ou par effet thermique.

L'encre est généralement déposée sur le support par un opérateur utilisant une micro-pipette pour former sur ledit support un film d'encre, ou par la circulation sur une lame d'une encre entre un canal d'entrée et un canal de sortie.

**État de la technique**

Le principe général d'impression d'une encre biologique par un laser impulsionnel dirigé vers le haut est décrit dans le brevet français FR3030361.

La demande de brevet internationale WO2018193446A1 décrit un procédé de transfert direct induit par laser dans lesquels une puce microfluidique est utilisée comme tête d'impression. La tête comprend une région supérieure transparente, une région centrale comprenant un canal de couche intermédiaire et un canal d'encre en communication fluidique avec ledit canal de couche intermédiaire et une couche inférieure ayant un orifice en contact fluidique avec le canal d'encre. Lorsque le matériau dans le canal de couche intermédiaire est exposé à une source d'énergie (habituellement un laser pulsé) au niveau d'un point opposé à l'orifice, le matériau s'évapore partiellement, créant une bulle de cavitation qui crée une augmentation de pression transitoire lorsqu'elle éclate, forçant ainsi l'encre à sortir de l'orifice vers un substrat de réception situé en dessous de la lame.

Cette solution n'est pas totalement satisfaisante car elle ne fonctionne qu'avec une impression à partir d'un laser situé au-dessus de la lame, et apportant une énergie pour « forcer » une particule à passer à travers un trou dont la section doit être suffisamment faible pour ne pas laisser s'écouler le fluide porteur. Cela occasionne de multiples contraintes limitant fortement le couple « fluide de transfert/éléments à transférer ».

La demande de brevet WO2017004615A1 décrit un système d'impression de matériaux consistant à utiliser un substrat de réception; utiliser un substrat cible ayant un support transparent aux photons, une couche intermédiaire qui absorbe les photons revêtant le support, et un matériau de transfert d'un échantillon de microbiome en phase solide revêtu sur le dessus de la couche intermédiaire opposée au support; et diriger l'énergie photonique à travers le support transparent de sorte que l'énergie photonique frappe la couche intermédiaire. Une partie de la couche intermédiaire est excitée par absorption de l'énergie photonique, et la couche intermédiaire excitée provoque un transfert d'une partie du matériau de transfert à travers un espace entre le substrat cible et le substrat de réception et sur le substrat d'accueil.

Cette solution n'est pas non plus satisfaisante car elle concerne des supports formant des micro-puits, ne permettant pas la circulation d'un fluide porteur déplaçant les éléments d'intérêts.

## Solution apportée par l'invention

Afin de remédier à ces inconvénients, l'invention concerne un procédé conforme à la revendication 1 et un support d'impression selon la revendication 22.

On entendra par encre au sens du présent brevet un fluide homogène ou un fluide contenant des particules ou des inhomogénéités ou une bio-encre transférable sous l'effet d'une impulsion laser.

Généralement, le procédé comporte des étapes de transfert par l'application de tirs laser impulsionnels orientés vers le haut, et une étape postérieure de régénération d'un film de mouillage (par retrait ou réorganisation dudit fluide) recouvrant ladite surface transparente d'interaction. Les tirs laser sont de préférence dirigés vers le haut.

On entendra au sens du présent brevet par « surface transparente d'interaction » une surface pleine, non percée, qui laisse passer un faisceau laser dans la bande de longueur d'onde dudit laser. Pour les autres longueurs d'onde, la surface peut être indifféremment transparente ou opaque.

On entend par « inhomogénéité » de l'encre au sens de la présente invention toute zone d'intérêt de l'encre de composition organique, minérale ou vivante, en particulier :

- des particules nanoscopiques telles que des exosomes ou autres vésicules produites par les cellules ou des nanoparticules de biomatériaux (hydroxyapatite) ou encore des nano-capsules de biomolécules (facteurs de croissance),
- des particules microscopiques telles que des cellules vivantes (cellules eucaryotes, cellules souches, globules, ...), des micro-particules de biomatériaux, des micro-capsules de biomolécules (facteurs de croissance),
- des particules mésoscopiques telles que des sphéroïdes constitués par des amas de cellules, des microcarriers (potentiellement biodégradables) dont la surface est revêtue de cellules ou de biomatériaux.
- des amas de particules dont la cohésivité est assuré au sein d'une capsule ou par un liquide ou gel visqueux De préférence, dans le contexte de la bio-impression, on entend par particules, des objets ayant des propriétés biologiques, comme par exemple, des cellules vivantes, des exosomes ou encore des biomolécules (macromolécules, protéines, peptides, facteur de croissance, ARN messager, microARN, ADN... ,).

Les particules peuvent également être non biologiques (c'est à dire inertes) et constituées par exemple d'un ou plusieurs biomatériaux, leur nature dépendant de l'application visée.

Conformément à l'invention, ladite étape de formation d'un film de fluide de mouillage est réalisée par l'injection dudit liquide de mouillage à la périphérie d'un espace cylindrique dont le fond est constitué par ladite surface transparente d'interaction.

Selon des variantes particulières de mise en oeuvre de l'invention:

- ledit film de liquide de mouillage ne vient que partiellement en contact avec le bord périphérique dudit espace cylindrique pendant l'étape de transfert par applications successives d'excitation énergétique orientable.
- le film de mouillage peut être modifié par une étape de traitement intermédiaire comprenant la photo-polymérisation, le changement de température ou la gélification, afin de conférer audit fluide des propriétés spécifiques autres que de mouillabilité, par exemple pour faire office de couche sacrificielle ou encore pour faire du photopatterning du film pour texturer la lame et faire des micropuits afin de contrôler la distribution spatiale des particules dans le film de bioencre. Cette étape peut être réalisée avant ou pendant l'interaction avec les moyens énergétiques d'impression de l'encre.

- ladite étape de retrait du fluide est effectuée par aspiration depuis la périphérie dudit espace cylindrique.
- ladite étape de retrait du fluide est effectuée par aspiration depuis le haut via un aspirateur externe.
- la section dudit film de fluide de mouillage est supérieure à la longueur capillaire dudit fluide de mouillage.
- une étape postérieure de retrait du fluide recouvrant ladite surface transparente d'interaction a lieu après les étapes d'impression.
- ladite étape de formation d'un film de fluide de mouillage est réalisée par l'alimentation de la surface d'interaction par au moins un canal recevant un volume de fluide de mouillage sous pression.
- ladite étape de formation d'un film de fluide de mouillage est réalisée par enduction, par électromouillage ou par centrifugation.
- ladite étape de formation d'un film de fluide de mouillage est réalisée par un flux d'air permettant l'étalement sans contact.
- ladite étape de retrait d'un film de liquide est réalisée par la mise en relation de la surface d'interaction par au moins un canal relié à une source de pression inférieure à la pression atmosphérique.
- ladite étape de retrait d'un film de liquide est réalisée par la mise en relation de la surface d'interaction par au moins un canal relié à une source travaillant en débit via un pousse seringue et/ou une pompe péristaltique ou encore via des systèmes MEMS pour la microfluidique.
- ladite étape de retrait d'un film de liquide est réalisé par la mise en surpression de l'ouverture cylindrique par rapport a la pression atmosphérique.
- ladite étape de dépôt d'une encre est réalisée depuis la surface supérieure dudit film de fluide de mouillage.
- ladite étape de dépôt d'une encre est réalisée depuis la partie basse de l'équipement à travers un orifice débouchant sur la zone cylindrique centrale d'interaction.
- Le procédé comporte des étapes de mesure de l'évolution d'au moins une grandeur physique comprenant la température, le pH, la viscosité ou la position et orientation d'un assemblage.
- Ledit assemblage est positionné avec une orientation spécifique par rapport à l'axe de propagation du faisceau laser par un système de servomoteurs et boucles de rétroaction.
- L'assemblage est relié directement à une plateforme. Cette liaison permet d'établir les connexions fluidiques de façon rapide sans avoir à les intégrer sur ledit support d'impression.
- l'encre biologique de nature inhomogène est stockée dans un tube dont les dimensions du diamètre intérieur sont préférentiellement entre 100 et 300 $\mu$m

mais peuvent aller de 30 $\mu$m a 1 mm.

- L'invention concerne aussi un support d'impression d'une encre en interaction avec un moyen d'excitation énergétique orientable pour produire une interaction ponctuelle, pour la mise en oeuvre des procédés susvisés, ledit support présentant une surface transparente d'interaction entourée par une bordure pour former un espace cylindrique caractérisé en ce qu'il présente une pluralité de canaux débouchant dans ladite bordure de l'espace cylindrique pour l'injection d'un fluide de mouillage de ladite surface transparente d'interaction, et un ou plusieurs canaux d'aspiration débouchant dans ladite bordure de l'espace cylindrique.
- Avantageusement, ledit canal d'aspiration débouche dans ladite bordure de l'espace cylindrique par l'intermédiaire d'une zone évasée.

Selon des variantes,

- Plusieurs liquides techniques sont utilisés, en particulier un type de liquide technique favorable au mouillage initialement, ledit liquide pouvant avoir d'autres propriétés utiles au procédé d'impression (température, gélification, absorption, etc.), et un liquide technique favorable au nettoyage après l'interaction avec la source énergétique.
- l'encre est acheminée sur l'espace d'interaction central à travers les canaux latéraux
- le film de mouillage est formé par un procédé comprenant la condensation de vapeur, le mouillage capillaire et l'électromouillage.

**Description détaillée de mises en œuvre de différents équipements selon l'invention**

La présente invention sera mieux comprise à la lecture de la description qui suit, se référant aux figures annexées illustrant des exemples non limitatifs de réalisation, où :

- La figure 1 représente une vue éclatée d'un support selon l'invention
- La figure 2 représente une vue schématique du circuit fluidique
- La figure 3 représente une vue de dessus de la zone de transfert
- La figure 4 représente une vue éclatée d'un support selon une variante de réalisation de l'invention
- La figure 5 représente une vue schématique d'une installation de bioimpression selon l'invention
- La figure 6 représente une vue en perspective d'un préhenseur de tête d'impression selon l'invention
- La figure 7 représente une vue en coupe de ce préhenseur de tête d'impression selon l'invention

## Support de transfert

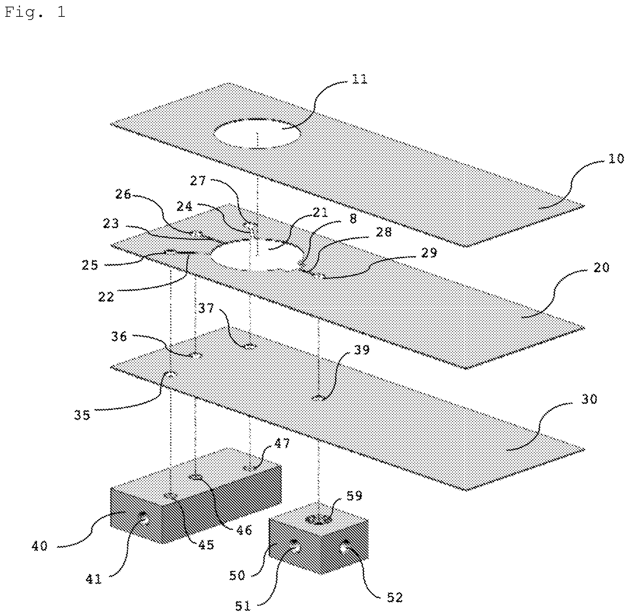

La figure 1 représente une vue éclatée d'un exemple de réalisation d'un support de transfert. Il est constitué par un assemblage de trois lames découpées (10, 20, 30) accolées pour former un bloc présentant une zone d'interaction avec le faisceau laser ainsi que des canaux d'alimentation avec un fluide de mouillage et d'aspiration pour le retrait du liquide présent sur la zone d'interaction.

Ces lames (10, 20, 30) sont typiquement en verre ou silicium et/ou en polymère (stérilisable ou non stérilisable), par exemple du COC, PMMA, PolyEtherEtherKetone PEEK. Alternativement, la lame inférieure (30) est constituée d'un matériau transparent à 1030 nm (longueur d'onde du laser utilisé), les autres lames (10, 20) pouvant être transparentes ou opaques.

La lame supérieure (10) est une pièce rectangulaire présentant une épaisseur comprise par exemple entre 100 micromètres et plusieurs millimètres. Elle présente une découpe (11) ronde correspondant à une découpe (21) prévue au même emplacement que la découpe sur la lame intermédiaire (20). Cette lame intermédiaire (20) présente également une épaisseur comprise entre 100 micromètres et plusieurs millimètres. L'ouverture (11) de la lame (10) peut présenter une géométrie différente de celle de l'ouverture (20). En particulier, elle peut être circulaire et présenter un rayon plus grand ou plus petit.

Elle présente en sus de la découpe ronde (21) trois découpes (22, 23, 24) s'étendant radialement par rapport à la découpe ronde (21) et aboutissant à l'extrémité opposée des renflements circulaires respectivement (25, 26, 27). Ces découpes renflées forment des canaux dont l'un est orienté selon l'axe longitudinal de la lame (20), est les autres sont disposés de part et d'autre du canal médian, l'axe des découpes (22, 24) des canaux extérieurs formant avec l'axe de la découpe (23) du canal médian un angle d'environ 45°, pour définir dans la paroi cylindrique de la découpe (21) un arc d'alimentation d'environ 90°. Ces valeurs sont relatives à l'exemple illustré en figure 1, d'autres configurations (nombre de canaux, positionnement des canaux, épaisseur des lames, etc.) sont envisageables pour répondre au besoin.

La section des découpes (11) et (21) est déterminée en fonction de la longueur capillaire du fluide de mouillage. Elle est légèrement supérieure à la longueur capillaire L du fluide de mouillage, pour limiter les effets capillaires et ainsi faciliter un étalement optimal du fluide de mouillage. La limite supérieure est déterminée par la surface balayée par le laser impulsionnel orientable.

La longueur capillaire L est déterminée comme suit :

$$[MATH1] \quad L =$$

Où :

- TS désigne la tension superficielle du fluide de mouillage
- MV désigne la masse volumique du fluide de mouillage
- g désigne l'accélération gravitationnelle valant 9,806 $m.s^{-2}$

Dans le cas d'un liquide de mouillage constitué par de l'eau pure à 20°, cette longueur capillaire L est égale à 2,7 millimètres pour une tension superficielle de $70.10^{-3}$ $N.m^{-1}$.

Du côté opposé aux découpes (22 à 24), la lame (20) présente une autre découpe (28) prolongée par un renflement (29), orienté radialement selon l'axe longitudinal de la lame (20). Cette découpe (28) est raccordée au bord de la découpe ronde (21) par une zone évasée (8) pour former un entonnoir facilitant l'aspiration du liquide déposé dans l'espace cylindrique défini par la découpe (21). Là encore, l'exemple illustré ici n'est qu'un exemple de réalisation, d'autres configurations (nombre de canaux de sortie, positionnement des canaux de sortie, géométrie,...) sont envisageables pour répondre au besoin.

La lame inférieure (30) ne présente pas de découpe centrale et forme le fond de l'espace cylindrique défini par les découpes (11, 21). Elle est par exemple réalisée en un matériau transparent dans la longueur d'onde du faisceau laser impulsionnel.

Elle présente trois trous (35, 36, 37) positionnés conformément aux renflements respectivement (25, 26, 27) de la lame intermédiaire (20) pour former des canaux verticaux d'alimentation des découpes respectivement (22, 23, 24).

Un quatrième trou (39) est positionné conformément au renflement (29) de la lame intermédiaire (20), pour définir un canal vertical d'aspiration débouchant dans le conduit formé par la découpe (28).

Les lames sont associées par collage par exemple (le matériau des lames (20) pouvant agir lui-même comme polymère thermo-activable ou thermo-collable), les découpes (22, 23, 24, 28 et 8) de la lame intermédiaire (20) étant fermées à leurs surfaces supérieures et inférieures par les lames respectivement supérieure (10) et inférieure (30) pour former des canaux débouchant dans la paroi annulaire entourant la découpe ronde (21) de la lame intermédiaire (20).

Cet ensemble est complété par un bloc d'alimentation (40) et un bloc d'aspiration (50).

Le bloc d'alimentation (40) présente un canal transversal (41) dans lequel débouche des canaux perpendiculaires (45, 46, 47) positionnés pour déboucher dans les trous (35, 36, 37) de la lame inférieure (30).

Le bloc d'aspiration (50) présente un canal vertical (59) dont la position est déterminée pour déboucher dans le renflement (39) de la plaque inférieure (30). L'autre extrémité de ce canal (59) débouche dans deux canaux (51, 52) perpendiculaires, l'un servant à l'aspiration du liquide contenu dans l'espace cylindrique défini par la découpe (21) de la lame intermédiaire (20), l'autre servant à l'injection optionnelle d'un liquide de nettoyage. Le bloc d'aspiration (50) pourrait donc aussi jouer le rôle de bloc d'alimentation (40) pour certaines configurations. Autour de l'extrémité du canal (59) il existe un renforcement permettant d'accueillir un éventuel trop plein de colle.

**Système d'alimentation**

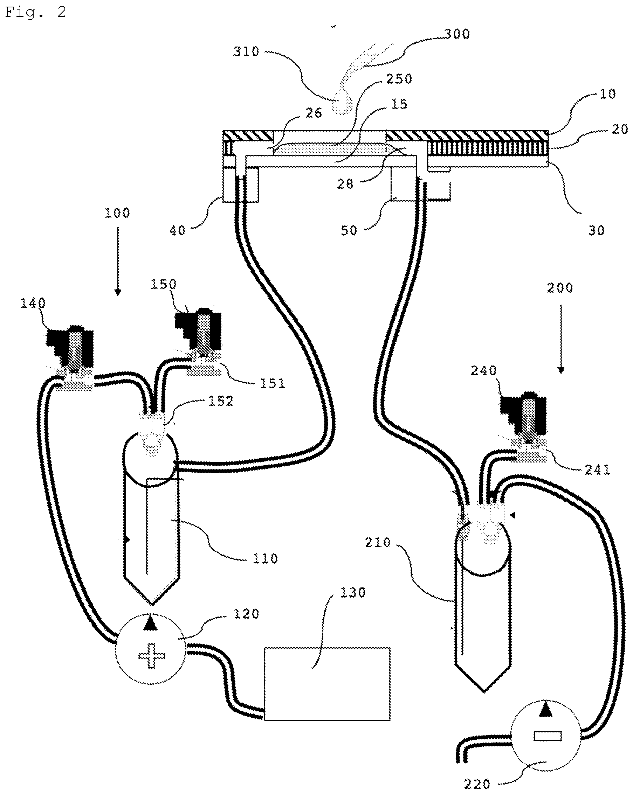

Le système fluidique illustré figure 2 est constitué par un sous-ensemble d'alimentation (100) et un sous-ensemble d'aspiration (200). Différentes solutions sont envisageables, notamment une solution péristaltique.

Le système d'alimentation (100) en fluide mouillant comporte un flacon (110), typiquement un flacon en polystyrène stérile relié à une pompe (120) alimentée par un réservoir (130) de fluide mouillant, par exemple de l'eau stérile ou une solution tampon biologique telle que le PBS ou l'HEPES permettant d'éviter le choc osmotique pour les cellules.

Une première électrovanne (140) normalement fermée commande l'alimentation du flacon (110) par la pompe.

Une deuxième électrovanne (150) normalement ouverte est placée entre une prise d'air (151) et un connecteur (152) ouvert sur le volume intérieur du flacon (110).

Au repos, l'électrovanne (140) est fermée et l'électrovanne (150) ouverte, ainsi le volume du flacon est soumis à la pression atmosphérique.

Lorsqu'on veut transférer du fluide depuis le flacon (110) sur la zone d'interaction (15), on commande l'ouverture de la première électrovanne (140) pour appliquer dans le flacon (110) une pression supérieure à la pression atmosphérique et on commande l'alimentation en fermant de manière contrôlée la deuxième électrovanne (150), pour former à la surface de la zone d'interaction (15) un film (16) de mouillage.

Le circuit d'aspiration (200) comprend un deuxième flacon (210) relié à la sortie du support. Ce deuxième flacon (210) peut être mis en dépression par une pompe (220) ou un réservoir de vide. Une électrovanne (240) normalement ouverte débouchant sur un évent (241) assure la mise à pression atmosphérique du flacon (210) au repos. Lorsqu'il est nécessaire d'aspirer le liquide (16) déposé sur la zone d'interaction (15), on commande la fermeture de l'électrovanne (240) et on récupère le liquide aspiré dans le flacon (210).

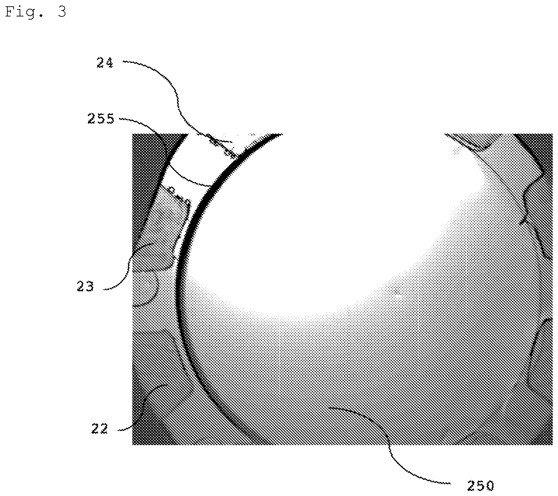

Comme illustré en figure 3, le liquide de mouillage forme d'abord un film reliant (23) et (28) puis ensuite il est modifié (diminué) en aspirant du liquide sur la zone d'interaction en laissant un espace semi-annulaire (255) entre le bord de l'espace cylindrique défini par les découpes (11, 21) et le bord du film (250) appelé film de pré-mouillage. De ce fait, le ménisque (250) déposé sur la zone d'interaction peut ne pas communiquer avec le fluide contenu dans les canaux d'alimentations (22 à 24) ce qui évite les retours de liquide vers le circuit d'alimentation. Une version avec une communication entre (250) et (22 à 24) est aussi envisageable, surtout avec un système de poussée et d'aspiration avec pompes péristaltiques.

L'écoulement du fluide de mouillage présente un nombre de Reynolds relativement élevé, supérieur à 2000 sur certaines zones. Ce paramètre permet de décrire l'évolution de la couche limite pour créer un écoulement turbulent sur la zone d'interaction.

Le film de pré-mouillage (250) résiduel (après aspiration) est d'une épaisseur plus faible, que l'épaisseur du film d'encre qui sera déposé par-dessus. Par ailleurs, la nature du liquide de pré-mouillage doit assurer une totale innocuité vis à vis des cellules de la bio-encre, c'est pourquoi il est constitué d'éléments bio-compatibles et / ou stériles. Le liquide de pré-mouillage peut être structuré avant ou après le dépôt de l'encre, par exemple à l'aide d'un flash lumineux qui génère par photopolymérisation une structure en nid d'abeille permettant de créer des micropuits définis sur la cartouche.

La génération de la surface mouillante pourrait être également obtenue par des procédés de greffage biochimique, de dépôt de couches minces ou de traitement des matériaux sans recours à un fluide de prémouillage.

Lorsque le film de pré-mouillage (250) est formé, on dépose une goutte (310) d'encre biologique sur la surface du fluide (250) à l'aide d'une pipette (300) ou un système avec pousse seringue par exemple.

L'encre biologique se répand sur la surface mouillante obtenue par l'intermédiaire du fluide de mouillage (250).

On peut alors procéder aux tirs d'impulsions laser.

Après la séquence de tirs, on aspire le liquide avec le circuit d'aspiration et/ou on le pousse par le circuit de poussée, et on peut injecter un liquide de nettoyage avant le démarrage d'une nouvelle séquence.

**Variante de réalisation du support**

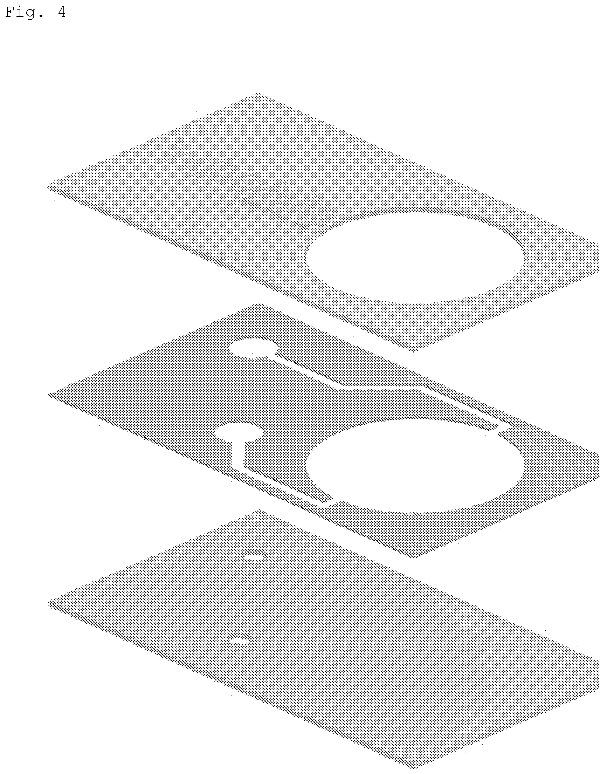

La figure 4 représente une vue éclatée d'une variante de réalisation d'un support de transfert. Il est constitué comme dans le premier exemple de réalisation décrit en référence à la figure 1 par un assemblage de trois lames découpées (10, 20, 30) accolées pour former un bloc présentant une zone d'interaction (11) avec le faisceau laser ainsi que des canaux d'alimentation avec un fluide de mouillage et d'aspiration pour le retrait du Ces lames (10, 20, 30) sont typiquement en verre ou silicium et/ou en polymère (stérilisable ou non stérilisable), par exemple du COC, PMMA, PolyEtherEtherKetone PEEK. Alternativement, la lame inférieure (30) est constituée d'un matériau transparent à 1030 nm (longueur d'onde du laser utilisé), les autres lames (10, 20) pouvant être transparentes ou opaques.

La lame supérieure (10) est une pièce rectangulaire de 41,5 x 23,5 millimètres avec une épaisseur de 0,5 millimètres. Elle présente une découpe (11) ronde d'un diamètre de 17,5 millimètres.

La lame intermédiaire (20) est découpée dans une feuille en un matériau tel que du silicone ou une matière plastique, ou encore du verre présente la même largeur et longueur, et une épaisseur de 0,15 à 0,16 millimètres, typiquement entre 0,1 et 0,35 millimètres. Elle comporte également une découpe (21) superposable à la découpe (11). Cette feuille fine présente en outre deux découpes circulaires (216, 217) d'une section de 2 millimètres reliés par des pistes découpées d'une largeur de 1 millimètre à la découpe circulaire (21).

La piste reliant la découpe (20) à la découpe circulaire (216) présente un premier bras (212) s'étendant transversalement, radialement par rapport à la découpe (20), et une découpe (218) reliant l'extrémité de ce bras (212) à la découpe (216).

La piste reliant la découpe (20) à la découpe circulaire (217) présente un premier bras (213) s'étendant transversalement, radialement par rapport à la découpe (20), et une découpe (219) reliant l'extrémité de ce bras (212) à la découpe (217).

La lame inférieure (30) est une pièce rectangulaire de mêmes dimensions que la première lame (10), de 41,5 x 23,5 millimètres avec une épaisseur de 0,5 millimètres. C'est cette lame qui est transparente dans la bande de longueur d'onde du laser et transparente ou opaque dans les autres bandes de longueur d'onde. Elle présente deux découpes traversantes (11) ronde d'un diamètre de 17,5 millimètres superposables avec les découpes (216, 217) de la lame intermédiaire (20). La surface circulaire correspondant aux découpes (11, 21) peut optionnellement être revêtue d'une couche sacrificielle, par exemple d'or, en fonction du type d'excitation laser envisagé.

En assemblant ces trois lames (10, 20, 30), on définit un support micro-fluidique avec deux orifices d'entrée-sortie de fluide traversant la lame inférieure (30) et la lame intermédiaire (20), et fermés par la lame supérieure (10). Ce support présente par ailleurs une zone d'interaction définie par les découpes (11, 21) traversant la lame supérieure (10) et la lame intermédiaire (20) et fermée par le fond transparent constitué par la lame inférieure (30). Deux canaux formés par les découpes (212, 218 ; 213, 219) fermés à la surface supérieure par la lame (10) et à la surface inférieure par la lame (20).

Le support forme ainsi une tête fluidique comportant un circuit de circulation d'une encre technique pénétrant dans la zone d'interaction par l'un des orifices (216, 217) et ressortant par l'autre orifice, après avoir formé un ménisque sur la zone d'interaction.

**Procédé de fabrication**

La fabrication de tels supports fluidiques commence par la préparation de lames de verre rectangulaires de 50x75x1 ou 50x75x1,6 mm ou des wafers en Verre de 6 ou 8 pouces de diamètre La seconde étape consiste à couler sur une lame de verre un polymère, qui va durcir lorsque l'on augmente sa température. Ce polymère est par exemple le polydiméthylsiloxane (PDMS) qui a la particularité d'être liquide à température ambiante et qui durcit en chauffant. L'étape de cuisson permet de solidifier le PDMS. Pour former une couche mince et homogène, de 0,1 à 0,2 millimètres, on procède à une mise en rotation rapide (« Spin coating »).

La troisième étape consiste à réaliser les découpes circulaires dans les lames de verre destinée à former la couche supérieur (10) d'une part, par forage par exemple. On réalise aussi les découpes circulaires (21) et les pistes (212, 216, 218 ; 213, 217, 219) par un laser, par gravure chimique humide (« wet etching ») ou par découpe.

L'étape suivante consiste à associer les trois couches, par une pression à température de solidification de la couche de PDMS par exemple. La couche intermédiaire de verre peux être remplacé par une couche de verre et dans ce cas l'association peut se faire par thermal bonding.

On procède ensuite à une étape de dépôt d'une couche d'or sur la surface circulaire de la lame inférieure (30), par dépôt sous vide dans la zone délimitée par les découpes (11, 21).

Ensuite le support fluidique est nettoyé, emballé et stérilisé.

**Description d'un automate d'impression**

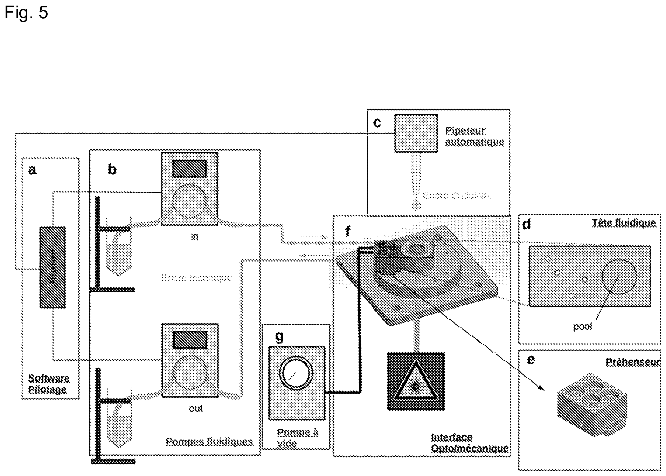

La figure 5 représente le schéma de principe d'un automate d'impression utilisant une tête fluidique (1000) précédemment décrite. La zone d'interaction est positionnée sur un préhenseur (2000) comportant des connecteurs fluidiques pour le raccordement d'un conduit d'alimentation (5011) et d'un conduit de vidange (5010).

Le préhenseur (2000) est monté sur une platine d'interface (3200) présentant un canal traversant (3210) vertical, pour le passage du faisceau laser (3100) à travers la surface d'interaction du support fluidique (1000). Un pipeteur (4000) supporté par un bras robotisé permet de déposer une goutte d'encre cellulaire sur la surface d'interaction du support fluidique (1000).

Le circuit d'encre biologique comprend une première pompe péristaltique (5001) d'alimentation de la surface d'interaction du support fluidique (1000) depuis un réservoir (5004), et une deuxième pompe péristaltique (5002) assurant l'aspiration du contenu de la surface d'interaction du support fluidique (1000) et le rejet dans un collecteur (5003). Un circuit électronique de pilotage (6000) commande le fonctionnement des deux pompes péristaltiques (5001, 5002) ainsi que du pipeteur (4000) et du bras robotisé qui commande son positionnement par rapport au support fluidique (1000). L'équipement comporte également une pompe à vide connectée au préhenseur (2000).

Cet équipement permet de limiter les éléments en contact avec l'encre cellulaire, au seul pipeteur (4000) et au support fluidique (1000), ainsi que le réservoir d'alimentation (5004) et le collecteur (5005), tous les autres éléments de l'équipement étant sans contact avec l'encre biologique.

## Description détaillée du préhenseur.

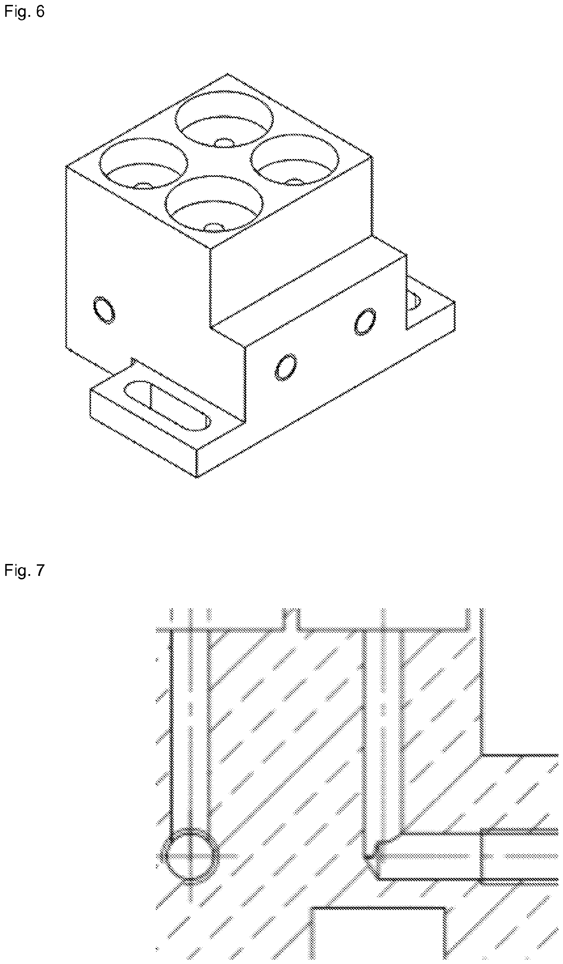

Les figures 6 et 7 représentent une vue en détail d'un exemple de réalisation d'un préhenseur (2000) de support fluidique (1000). La cavité active formée sur le support d'impression forme une sorte de boîte de Petri dans laquelle sont présentes les particules d'intérêts à transférer vers le récepteur par une impulsion laser. La difficulté est d'assurer un positionnement très précis du support fluidique (1000) par rapport au point focal du laser et ce pour toute la surface d'interaction utile du support fluidique (1000). La précision attendue est typiquement de $\pm$ 20 $\mu$m. Pour atteindre une telle précision, sachant que les supports fluidiques (1000) sont interchangeables est sont destinés à être mis en place et retirés de manière répétée, tout en présentant à chaque fois le positionnement précis par rapport au plan focal du laser d'excitation.

A cet effet, le préhenseur (2000) est usiné dans un bloc métallique pouvant être aimanté. Ce bloc massif présente une surface supérieure (2010) parfaitement plane, dans laquelle débouche quatre logements de joints cylindriques (2011 à 2014). Une première paire de canaux coudés (2021, 2023) relie deux des cavités (2o11, 2013) à des connecteurs fluidiques (2033) prévues sur des faces latérales.

Une deuxième paire de canaux coudés (2022, 2024) relie les deux autres cavités (2o12, 2014) à des connecteurs pneumatiques (2032, 2034) prévues sur la face avant.

Ces connecteurs fluidiques servent pour deux d'entre eux au raccordement des conduits de vide reliés à la pompe à vide (7000) destinée à créer une dépression maintenant le support fluidique (1000) appliqué contre la surface supérieure (2010) du préhenseur (2000), par un effet ventouse, avec une très grande force et précision. Suivant le pilotage de la pompe à vide (7000), on procède au maintien du support fluidique en position ou à sa libération.

Les deux autres cavités (2011, 2013) sont destinées à transmettre le fluide entrant et sortant dans le support fluidique (1000). Leurs positions correspondent aux positions des orifices (216, 217). Ces cavités (2011, 2013) comportent un joint d'étanchéité et commmuniquent avec des connecteurs fluidiques (2031, 2033) destinés au raccordement des conduits reliant les pompes péristaltiques (5001 et 5002.

Le préhenseur est fixé sur la tête d'excitation, notamment sur le bord de la fenêtre laissant passer le faisceau laser d'excitation, par une liaison magnétique ou par des boulons traversant les passages (2051, 2052) prévus sur les pattes (2061, 2062) .

La face supérieure du support fluidique (1000) est mis alternativement en regard du pipeteur automatique (4000) pour déposer les substances d'intérêt sur le film fluidique formé dans la cavité du support fluidique (1000), ou en regard du récepteur sur laquelle sont déposés les substances d'intérêt par le processus de bioimpression. Les deux éléments sont positionnés à l'aide d'un bras robotisé.

## Principe de fonctionnement

Le système décrit permet de réaliser un cycle de bioimpression dans une enceinte close stérile, de manière totalement automatique, sans intervention humaine ce qui permet d'éviter tout risque de contamination ou de pollution du récepteur.

Le procédé entier illustré ci-dessous se décompose en 5 étapes distinctes et chaque étape répond à certaines contraintes.

Première étape - Apport des consommables

Au début de la manipulation, l'expérimentateur installe les consommables à usage unique composés des tubes fluidiques, de l'encre technique, notamment la source d'encre technique (5004) et le récipient-poubelle (5003), de l'encre cellulaire, des cônes pour le pipeteur, du receveur, de la tête et du préhenseur avec ces connexions.

Pour faciliter l'installation par l'utilisateur, le système utilise des pompes péristaltiques (5001, 5002) permettant un raccordement facile avec ces tubes fluidiques.

L'impression d'un tissu de 40cm$^2$ nécessite environ 40 cycles d'impression, si 1ml d'encre technique sont utilisés pour 1 cycle cela veut dire qu'il faut 40 ml d'encre technique. Il faut minimiser le volume d'encre technique utilisée par cycle.

Deuxième étape : l'amorçage de la cavité d'interaction du support fluidique.

Le but de l'amorçage est de remplir le tube, le canal d'entrée du support fluidique (1000) ainsi que la cavité.

Il convient d'éviter l'apparition de bulles dans le tube et la cavité du joint lors du remplissage. Ces bulles vont ensuite se déporter dans le conteneur lors du procédé et nuire à son bon déroulement. A cet effet, on commande les deux pompes péristaltiques d'injection (5001) et d'aspiration (5002) de manière coordonnée pour pousser fort tout en aspirant lors de l'amorçage afin d'éliminer les bulles.

Troisième étape : Cycle d'impression d'un motif

Cette étape va être cyclée autant de fois qu'on peut tirer sur une même cartouche. L'utilisation de deux pompes péristaltiques (5001, 5002) permet d'établir un pont fluidique continu entre l'entrée (212) et la sortie (213) du support fluidique et éviter toute perturbation résultant d'un séchage local formant une barrière à l'écoulement de l'encre technique. Ce pont fluidique permet d'établir le contact entre l'entrée et la sortie du support fluidique car s'il n'y a pas contact l'aspiration n'influe pas sur le liquide présent dans la cavité. Le pont fluidique permet notamment de repousser la ligne de contact afin de mouiller entièrement la cavité d'interaction.

On aspire afin de réduire l'épaisseur du film et rompre le contact entre le film et le reste du système fluidique (canaux et bords de la cavité).

Il est souhaitable d'assurer la reproductibilité du film. Il faut qu'il ait toujours le même profil et la même épaisseur. Le contrôle du film de prémouillage est critique pour la reproductibilité de l'étalement.

Par ailleurs, le contact fluidique doit être rompu sinon les cellules peuvent être aspirées dans les canaux par capillarité. A cet effet, on peut procéder au gravage d'une ligne d'ancrage sur la cavité afin de fixer la ligne de contact du film de prémouillage.

Quatrième étape : Dépôt de l'encre cellulaire

Ce dépôt est effectué par le bras robotisé. Pour éviter la formation d'amas cellulaire lors du dépôt et nuise à l'uniformité de l'étalement, le pipeteur doit procéder à une homogénéisation de la solution d'encre cellulaire juste avant le dépôt.

Cinquième étape : installation du receveur:

Cette étape est effectuée par le bras robot.

Etape de bio-impression

On procède ensuite à une succession de tirs laser sur la cavité du support fluidique (1000) pour imprimer le motif sur le receveur.

On recommence ensuite depuis le début du cycle tant que l'on peut tirer sur la cartouche.

Dans le cas d'une solution utilisant une couche sacrificielle, le nombre de tirs possibles sur une tête fluidique est limité par l'ablation de l'or dans le procédé d'impression laser. En effet on ne peut pas tirer au même endroit car l'absence d'or empêche le transfert du pattern. Avec le pattern carré de gouttes espacées de 500pm, et un spot actuel de 50 pm, 100 motifs sont théoriquement possibles. Cependant une déformation de la surface d'or autour du spot après un tir a été observée et retirer dans cette zone peut diminuer la qualité de l'impression.

Lorsque l'impression du tissu est terminée on peut vider les tubes en les utilisant tous les deux en aspiration et jeter les consommables.

**Revendications**

1. - Procédé d'impression mettant en œuvre un équipement comportant un moyen d'excitation énergétique orientable pour produire une interaction ponctuelle avec au moins une encre pouvant contenir des inhomogénéités déposée sur un support d'impression présentant une surface transparente d'interaction, afin de provoquer le transfert d'une partie ciblée de ladite encre vers un récepteur, comportant une étape d'injection d'un liquide de mouillage à la périphérie d'un espace cylindrique(21)dont le fond est constitué par ladite surface transparente d'interaction (15) pour former un film de mouillage (250) recouvrant au moins partiellement ladite surface transparente d'interaction (15), suivie d'une étape de dépôt de ladite encre sur la surface dudit film de mouillage (250) et d'étapes de transfert.

2. - Procédé d'impression selon la revendication précédente **caractérisé en ce que** ledit film de liquide de mouillage (250) ne vient que partiellement en contact avec le bord périphérique dudit espace cylindrique pendant l'étape de transfert par applications successives d'excitation énergétique orientable.

3. - Procédé d'impression selon la revendication 1 **caractérisé en ce que** le film de mouillage est modifié par une étape de traitement intermédiaire comprenant la photopolymérisation, le changement de température ou la gélification, afin de conférer audit film de mouillage (250) des propriétés spécifiques autres que de mouillabilité.

4. - Procédé d'impression selon la revendication 1 **caractérisé en ce qu'**une étape postérieure de retrait de l'encre recouvrant ladite surface transparente d'interaction (15)a lieu après les étapes d'impression.

5. - Procédé d'impression selon la revendication 1 **caractérisé en ce qu'**une étape de retrait du film de mouillage (250) est effectuée par aspiration depuis la périphérie dudit espace cylindrique (21).

6. - Procédé d'impression selon la revendication précédente **caractérisé en ce que** ladite étape de retrait du film est effectuée par aspiration depuis le haut via un aspirateur externe.

7. - Procédé d'impression selon la revendication 1 **caractérisé en ce que** la section dudit film de fluide de mouillage est supérieure à la longueur capillaire dudit fluide de mouillage.

**8.** - Procédé d'impression selon la revendication 1 **caractérisé en ce que** ladite étape de formation d'un film de fluide de mouillage (250) est réalisée par l'alimentation de la surface d'interaction (15) par au moins un canal recevant un volume de fluide de mouillage sous pression.

**9.** - Procédé d'impression selon la revendication 1 **caractérisé en ce que** ladite étape de formation d'un film de fluide de mouillage (250) est réalisée par enduction, par électromouillage ou par centrifugation.

**10.** - Procédé d'impression selon la revendication 1 **caractérisé en ce que** ladite étape de formation d'un film de fluide de mouillage (250) est réalisée par un flux d'air permettant l'étalement sans contact.

**11.** - Procédé d'impression selon la revendication 1 **caractérisé en ce qu'**une étape de retrait d'un film de liquide est réalisée par la mise en relation de la surface d'interaction (15) par au moins un canal relié à une source de pression inférieure à la pression atmosphérique.

**12.** - Procédé d'impression selon la revendication 1 **caractérisé en ce qu'**une étape de retrait d'un film de liquide est réalisée par la mise en relation de la surface d'interaction (15) par au moins un canal relié à une source travaillant en débit via un pousse seringue et/ou une pompe péristaltique ou encore des systèmes MEMS pour la microfluidique.

**13.** - Procédé d'impression selon la revendication 1 **caractérisé en ce qu'**une étape de retrait d'un film de liquide est réalisé par la mise en surpression de l'ouverture cylindrique de l'espace cylindrique (11,21) par rapport à la pression atmosphérique.

**14.** - Procédé d'impression selon la revendication 1 **caractérisé en ce que** ladite étape de dépôt d'une encre est réalisée depuis la surface supérieure.

**15.** - Procédé d'impression selon la revendication 1 **caractérisé en ce que** ladite étape de dépôt d'une encre est réalisée depuis la partie basse de l'équipement à travers un orifice débouchant sur l'espace cylindrique centrale d'interaction (11,21,30).

**16.** - Procédé d'impression selon la revendication 1 **caractérisé en ce qu'**il comporte des étapes de mesure de l'évolution d'au moins une grandeur physique comprenant la température, le pH, la viscosité ou la position et orientation d'un assemblage de trois lames découpées (10,20,30).

**17.** - Procédé d'impression selon la revendication 1 **caractérisé en ce que** le moyen d'excitation énergétique est un faisceau laser et **en ce qu'**un assemblage de trois lames découpées (10, 20, 30) est positionné avec une orientation spécifique par rapport à l'axe de propagation du faisceau laser par un système de servomoteurs et boucles de rétroaction.

**18.** - Procédé d'impression selon la revendication 1 **caractérisé en ce que** l'encre comprenant des inhomogénéités est stockée dans un tube dont les dimensions du diamètre intérieur sont préférentiellement entre 100 et 300 $\mu$m mais peuvent aller de 30 $\mu$m à 1 mm.

**19.** - Procédé d'impression selon la revendication 1 **caractérisé en ce que** le récepteur est disposé au-dessus dudit support d'impression.

**20.** - Procédé d'impression selon la revendication 1 **caractérisé en ce que** l'encre chargée avec des particules est une bioencre.

**21.** - Support d'impression d'une encre pour la mise en œuvre du procédé selon l'une au moins des revendications 1 à 20, constitué par un assemblage de lames découpées (10, 20, 30) accolées pour former un bloc présentant une zone d'interaction (15) avec le faisceau laser, **caractérisé en ce que** ledit support présente une surface transparente d'interaction (15) entourée par une bordure pour former un espace cylindrique (21) et qu'il présente une pluralité de canaux débouchant dans ladite bordure de l'espace cylindrique pour l'injection à la périphérie dudit espace cylindrique d'un fluide de mouillage de ladite surface transparente d'interaction, et un ou plusieurs canaux d'aspiration débouchant dans ladite bordure de l'espace cylindrique.

**22.** - Support d'impression selon la revendication précédente **caractérisé en ce que** ledit canal d'aspiration débouche dans ladite bordure de l'espace cylindrique par l'intermédiaire d'une zone évasée.

**23.** - Support d'impression selon la revendication précédente **caractérisé en ce que** plusieurs liquides techniques sont utilisés, en particulier un type de liquide technique favorable au mouillage initialement, ledit liquide pouvant avoir d'autres propriétés utiles au procédé d'impression, et un liquide technique favorable au nettoyage après l'interaction avec la source énergétique.

**24.** - Support d'impression selon la revendication précédente **caractérisé en ce qu'**il comprend des canaux latéraux pour l'acheminement de l'encre qui est acheminée sur la zone d'interaction.

**Patentansprüche**

1.  Druckverfahren, das eine Ausrüstung implementiert, umfassend ein ausrichtbares Energieanregungsmittel, um eine punktuelle Wechselwirkung mit mindestens einer Tinte zu erzeugen, die Inhomogenitäten enthalten kann, die auf einem Druckträger abgelagert ist, der eine transparente Wechselwirkungsfläche aufweist, um die Übertragung eines gezielten Teils der Tinte zu einem Empfänger zu bewirken, umfassend einen Schritt des Injizierens einer Benetzungsflüssigkeit in den Umfang eines zylindrischen Raums (21), dessen Boden durch die transparente Wechselwirkungsfläche (15) gebildet wird, um einen Benetzungsfilm (250) zu bilden, der die transparente Wechselwirkungsfläche (15) zumindest teilweise bedeckt, gefolgt von einem Schritt der Ablagerung der Tinte auf der Oberfläche des Benetzungsfilms (250) und von Übertragungsschritten.

2.  Druckverfahren nach dem vorstehenden Anspruch, **dadurch gekennzeichnet, dass** der Benetzungsflüssigkeitsfilm (250) während des Übertragungsschritts durch aufeinanderfolgende Anwendungen von ausrichtbarer Energieanregung nur teilweise mit dem Umfangsrand des zylindrischen Raums in Kontakt kommt.

3.  Druckverfahren nach Anspruch 1, **dadurch gekennzeichnet, dass** der Benetzungsfilm durch einen Zwischenbehandlungsschritt modifiziert wird, der Fotopolymerisation, Temperaturänderung oder Gelierung umfasst, um dem Benetzungsfilm (250) spezifische Eigenschaften zu verleihen, die keine Benetzbarkeitseigenschaften sind.

4.  Druckverfahren nach Anspruch 1, **dadurch gekennzeichnet, dass** ein nachfolgender Schritt des Entfernens von Tinte, welche die transparente Wechselwirkungsfläche (15) bedeckt, nach den Druckschritten stattfindet.

5.  Druckverfahren nach Anspruch 1, **dadurch gekennzeichnet, dass** ein Schritt des Entfernens des Benetzungsfilms (250) durch Absaugen von dem Umfang des zylindrischen Raums (21) aus durchgeführt wird.

6.  Druckverfahren nach dem vorstehenden Anspruch, **dadurch gekennzeichnet, dass** der Schritt des Entfernens des Films durch Absaugen von der Oberseite aus über einen externen Sauger durchgeführt wird.

7.  Druckverfahren nach Anspruch 1, **dadurch gekennzeichnet, dass** der Querschnitt des Benetzungsfluidfilms größer ist als die Kapillarlänge des Benetzungsfluids.

8.  Druckverfahren nach Anspruch 1, **dadurch gekennzeichnet, dass** der Schritt der Bildung eines Benetzungsfluidfilms (250) durch Versorgen der Wechselwirkungsfläche (15) durch mindestens einen Kanal durchgeführt wird, der ein Volumen an Benetzungsfluid unter Druck aufnimmt.

9.  Druckverfahren nach Anspruch 1, **dadurch gekennzeichnet, dass** der Schritt der Bildung eines Benetzungsfluidfilms (250) durch Beschichtung, Elektrobenetzung oder Zentrifugation durchgeführt wird.

10. Druckverfahren nach Anspruch 1, **dadurch gekennzeichnet, dass** der Schritt zur Bildung eines Benetzungsluidfilms (250) durch einen Luftstrom durchgeführt wird, der eine kontaktlose Ausbreitung ermöglicht.

11. Druckverfahren nach Anspruch 1, **dadurch gekennzeichnet, dass** ein Schritt des Entfernens des Flüssigkeitsfilms durchgeführt wird, indem die Wechselwirkungsfläche (15) durch mindestens einen Kanal, der mit einer Druckquelle unterhalb des Atmosphärendrucks verbunden ist, in Verbindung gebracht wird.

12. Druckverfahren nach Anspruch 1, **dadurch gekennzeichnet, dass** ein Schritt zum Entfernen eines Flüssigkeitsfilms durchgeführt wird, indem die Wechselwirkungsfläche (15) durch mindestens einen Kanal in Verbindung gebracht wird, der mit einer Quelle verbunden ist, die im Durchfluss über eine Spritzenpumpe und/oder eine peristaltische Pumpe oder auch MEMS-Systeme für die Mikrofluidik arbeitet.

13. Druckverfahren nach Anspruch 1, **dadurch gekennzeichnet, dass** ein Schritt zum Entfernen eines Flüssigkeitsfilms durchgeführt wird, indem die zylindrische Öffnung des zylindrischen Raums (11,21) in Bezug auf den atmosphärischen Druck unter Überdruck gesetzt wird.

14. Druckverfahren nach Anspruch 1, **dadurch gekennzeichnet, dass** der Schritt der Ablagerung einer Tinte von der oberen Oberfläche aus durchgeführt wird.

15. Druckverfahren nach Anspruch 1, **dadurch gekennzeichnet, dass** der Schritt der Ablagerung einer Tinte vom unteren Teil der Ausrüstung durch eine Öffnung durchgeführt wird, die in den zentralen zylindrischen Wechselwirkungsraum (11, 21, 30) mündet.

16. Druckverfahren nach Anspruch 1, **dadurch gekennzeichnet, dass** es Schritte zum Messen der Entwicklung mindestens einer physikalischen Größe umfasst, welche die Temperatur, den pH-Wert, die Viskosität oder die Position und Ausrichtung einer Anordnung von drei gestanzten Lamellen (10, 20, 30) umfasst.

17. Druckverfahren nach Anspruch 1, **dadurch gekennzeichnet, dass** das Energieanregungsmittel ein Laserstrahl ist und **dadurch, dass** eine Anordnung von drei gestanzten Lamellen (10, 20, 30) mit einer spezifischen Ausrichtung relativ zur Ausbreitungsachse des Laserstrahls durch ein System von Servomotoren und Rückkopplungsschleifen positioniert wird.

18. Druckverfahren nach Anspruch 1, **dadurch gekennzeichnet, dass** die Inhomogenitäten umfassende Tinte in einem Schlauch gespeichert wird, dessen Abmessungen des Innendurchmessers vorzugsweise zwischen 100 und 300 $\mu$m liegen, aber von 30 $\mu$m bis 1 mm betragen können.

19. Druckverfahren nach Anspruch 1, **dadurch gekennzeichnet, dass** der Empfänger oberhalb des Druckträgers angeordnet ist.

20. Druckverfahren nach Anspruch 1, **dadurch gekennzeichnet, dass** die mit Partikeln beladene Tinte eine Bio-Tinte ist.

21. Druckträger einer Tinte für die Durchführung des Verfahrens nach mindestens einem der Ansprüche 1 bis 20, der aus einer Anordnung von gestanzten Lamellen (10, 20, 30) besteht, die aneinandergefügt sind, um einen Block zu bilden, der einen Wechselwirkungsbereich (15) mit dem Laserstrahl aufweist, **dadurch gekennzeichnet, dass** der Träger eine transparente Wechselwirkungsfläche (15) aufweist, die von einem Rand umgeben ist, um einen zylindrischen Raum (21) zu bilden, und dass er eine Vielzahl von Kanälen aufweist, die in den Rand des zylindrischen Raums münden, um am Umfang des zylindrischen Raums ein Fluid zur Benetzung der transparenten Wechselwirkungsfläche zu injizieren, und einen oder mehrere Saugkanäle, die in den Rand des zylindrischen Raums münden.

22. Druckträger nach dem vorstehenden Anspruch, **dadurch gekennzeichnet, dass** der Saugkanal mittels eines ausgeweiteten Bereichs in den Rand des zylindrischen Raums mündet.

23. Druckträger nach dem vorstehenden Anspruch, **dadurch gekennzeichnet, dass** mehrere technische Flüssigkeiten verwendet werden, insbesondere eine Art von technischer Flüssigkeit, die anfänglich die Benetzung begünstigt, wobei die Flüssigkeit weitere für das Druckverfahren nützliche Eigenschaften aufweisen kann, und eine technische Flüssigkeit, welche die Reinigung nach der Wechselwirkung mit der Energiequelle begünstigt.

24. Druckträger nach dem vorstehenden Anspruch,

**dadurch gekennzeichnet, dass** er seitliche Kanäle für den Transport von Tinte umfasst, die auf den Wechselwirkungsbereich geleitet wird.

## Claims

1. - A printing method implementing a piece of equipment comprising an energy-delivering excitation means that is orientable to produce a punctiform interaction with at least one ink that possibly contains inhomogeneities and that is deposited on a printing medium having a transparent interaction area, in order to cause the transfer of a targeted portion of said ink to a receiver, comprising a step of injecting a wetting liquid at the periphery of a cylindrical space (21) the bottom whereof consists of said transparent interaction area (15) in order to form a wetting film (250) at least partially covering said transparent interaction area (15), followed by a step of depositing said ink on the area of said wetting film (250) and transferring steps.

2. - The printing method according to the preceding claim, **characterized in that** said film of wetting liquid (250) only partially comes into contact with the peripheral edge of said cylindrical space during the transfer step by successive applications of orientable energy excitation.

3. - The printing method according to claim 1, **characterized in that** the wetting film is modified by an intermediate treatment step comprising photopolymerization, temperature change or gelation, in order to give said wetting film (250) specific properties other than wettability.

4. - The printing method according to claim 1, **characterized in that** a subsequent step of removing the ink covering said transparent interaction area (15) takes place after the printing steps.

5. - The printing method according to claim 1, **characterized in that** a step of removing the wetting film (250) is performed by suction from the periphery of said cylindrical space (21).

6. - The printing method according to the preceding claim, **characterized in that** said step of removing the film is performed by suction from above via an external aspirator.

7. - The printing method according to claim 1, **characterized in that** the cross-section of said film of wetting fluid is greater than the capillary length of said wetting fluid.

8. - The printing method according to claim 1, **charac-**

terized in that said step of forming a film of wetting fluid (250) is carried out by supplying the interaction area (15) with at least one channel receiving a volume of pressurized wetting fluid.

9. - The printing method according to claim 1, **characterized in that** said step of forming a film of wetting fluid (250) is carried out by coating, by electrowetting or by centrifugation.

10. - The printing method according to claim 1, **characterized in that** said step of forming a film of wetting fluid (250) is carried out by an air flow allowing contactless spreading.

11. - The printing method according to claim 1, **characterized in that** a step of removing a film of liquid is carried out by connecting the interaction area (15) by at least one channel connected to a source of pressure below atmospheric pressure.

12. - The printing method according to claim 1, **characterized in that** a step of removing a film of liquid is carried out by connecting the interaction area (15) by at least one channel connected to a source working by flow via a syringe pump and/or a peristaltic pump or even MEMS systems for microfluidics.

13. - The printing method according to claim 1, **characterized in that** a step of removing a film of liquid is carried out by placing the cylindrical opening of the cylindrical space (11, 21) under overpressure relative to atmospheric pressure.

14. - The printing method according to claim 1, **characterized in that** said step of depositing ink is carried out from the upper area.

15. - The printing method according to claim 1, **characterized in that** said step of depositing an ink is carried out from the lower part of the equipment through an orifice opening out onto the central cylindrical interaction area (11, 21, 30).

16. - The printing method according to claim 1, **characterized in that** it comprises steps of measuring the change in at least one physical value comprising the temperature, the pH, the viscosity or the position and orientation of an assembly of three cut strips (10, 20, 30).

17. - The printing method according to claim 1, **characterized in that** the energy excitation means is a laser beam and **in that** an assembly of three cut strips (10, 20, 30) is positioned with a specific orientation with respect to the axis of propagation of the laser beam by a system of servomotors and feedback loops.

18. - The printing method according to claim 1, **characterized in that** the ink comprising inhomogeneities is stored in a tube whose inside diameter dimensions are preferably between 100 and 300 $\mu$m, but can range from 30 $\mu$m to 1 mm.

19. - The printing method according to claim 1, **characterized in that** the receiver is disposed above said printing medium.

20. - The printing method according to claim 1, **characterized in that** the ink loaded with particles is a bio-ink.

21. - An ink printing medium for implementing the method according to at least one of claims 1 to 20, consisting of an assembly of cut strips (10, 20, 30) that are contiguous to form a block having an interaction area (15) with the laser beam, **characterized in that** said medium has a transparent interaction area (15) surrounded by a border to form a cylindrical space (21) and that it has a plurality of channels opening into said border of the cylindrical space for the injection at the periphery of said cylindrical space of a wetting fluid of said transparent interaction area, and one or more suction channels opening into said border of the cylindrical space.

22. - The printing medium according to the preceding claim, **characterized in that** said suction channel opens into said border of the cylindrical space via a flared zone.

23. - The printing medium according to the preceding claim, **characterized in that** several technical liquids are used, in particular a type of technical liquid which is favorable to wetting initially, said liquid being able to have other properties which are useful to the printing method, and a technical liquid which is favorable to cleaning after the interaction with the energy source.

24. - The printing medium according to the preceding claim, **characterized in that** it comprises lateral channels for conveying the ink that is conveyed over the interaction zone.

Fig. 1

Fig. 2

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3030361
- WO 2018193446 A1

- WO 2017004615 A1

**Littérature non-brevet citée dans la description**

- **GRIFFITH, L. G. ; NAUGHTON, G.** Tissue engineering-- current challenges and expanding opportunities. *Science,* 2002, vol. 295 (5557), 1009-1014
- **KLEBE, R.** Cytoscribing : A Method for Micropositioning Cells and the Construction of Two- and Three-Dimensional Synthetic Tissues. *Expérimental Cell Research,* 1988, vol. 179 (2), 362-373

- **KLEBE, R. ; THOMAS, C ; GRANT, G. ; GRANT, A. ; GOSH, P.** Cytoscription : Computer controlled micropositioning of cell adhésion proteins and cells. *Methods in Cell Science,* 1994, vol. 16 (3), 189-192